# FASCICULE DE BREVET EUROPEEN

(11) **EP 2 468 585 B1**
(45) Date de publication et mention de la délivrance du brevet: **08.01.2014**
(21) Numéro de dépôt: 11195660.3
(22) Date de dépôt: 23.12.2011
(51) Int. Cl.: B60R 25/04, G07C 9/00, E05B 65/20

(54) **Système de gestion électronique d'un véhicule amélioré**
Verbessertes elektronisches Fahrzeugsteuersystem
Improved electronic management system for a vehicle

(30) Priorité: 24.12.2010 FR 1061247
(43) Date de publication de la demande: 27.06.2012
(73) Titulaire: MAGNETI MARELLI FRANCE, 78190 Trappes (FR)
(72) Inventeur: Bianco, Patrick, 92140 CLAMART (FR)
(74) Mandataire: Regimbeau

(56) Documents cités:
- EP-A1- 1 932 733
- DE-A1- 10 131 896
- DE-A1- 10 234 231
- DE-A1- 10 236 957
- US-A1- 2003 216 817

## Description

L'invention concerne les systèmes de gestion électronique pour véhicule. Plus particulièrement, l'invention concerne les systèmes notamment pour la gestion de l'identification/authentification du ou des utilisateur(s) d'un véhicule, l'ouverture d'une ou plusieurs portières et le démarrage du véhicule.

Dans ce domaine, on connaît de nombreux systèmes de gestion électronique gérant l'ensemble des fonctionnalités d'un même véhicule à partir d'une unité centrale de contrôle.

Les documents EP 1 932 733 et DE 101 31 896 représentent des exemples selon l'état de la technique.

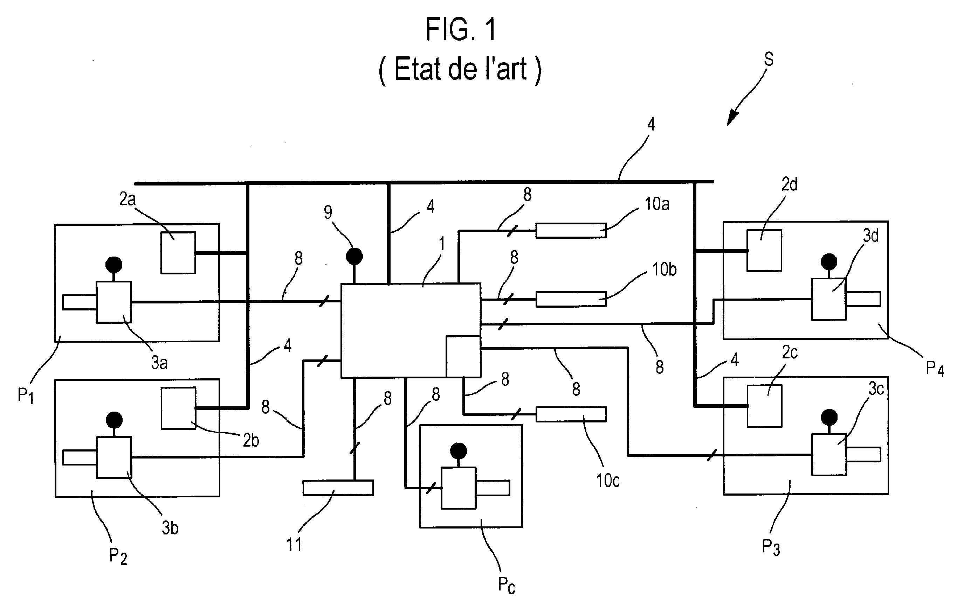

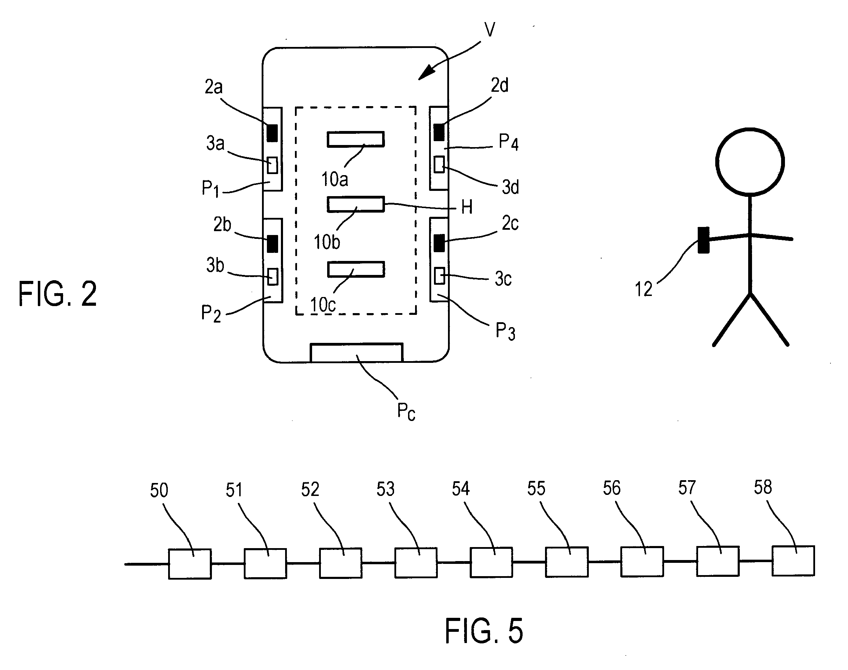

En référence aux figures 1 et 2, un système de gestion électronique d'un véhicule (comprenant par exemple quatre portières P1 à P4) connu de l'état de la technique, comprend les éléments suivants :
■ une unité centrale de contrôle 1 destinée à la gestion électronique centrale d'un véhicule V. Cette unité contrôle l'ensemble des fonctions du véhicule comme la commande électrique des équipements du véhicule (verrouillage/déverrouillage des portes, climatisation, télématique ; navigation, ...), l'interface avec l'utilisateur (tableau de bord par exemple) et le contrôle moteur. Cette unité gère également l'identification/authentification d'un utilisateur du véhicule comme décrit par la suite.
■ une pluralité d'unités de contrôle de portière 2a à 2d, chacune étant destinée au verrouillage/déverrouillage respectif d'une portière P1 à P4 à laquelle ladite unité de contrôle de portière est associée. Cette unité de contrôle de portière est commandée par l'unité de contrôle centrale 1 via le réseau principal 4 du véhicule V (généralement un bus CAN).
■ une pluralité de moyens d'interface avec l'extérieur 3a à 3d, chacun associé à une des portières P1 à P4 et destiné :
   o à détecter une intervention extérieure d'un utilisateur U du véhicule V, et
   o à communiquer avec un moyen d'authentification 12 d'un utilisateur du véhicule V.
      Ce moyen d'interface est généralement sous la forme d'un moyen mettant en oeuvre une communication sans fil (par ondes magnétiques), permettant de communiquer par radio fréquence avec le moyen d'authentification 12 de l'utilisateur. Un tel moyen d'authentification 12 est généralement sous la forme d'un boitier destiné à communiquer sans fil avec le véhicule et plus particulièrement avec l'unité centrale de contrôle dans le but de s'identifier auprès de cette dernière comme décrit par la suite. Chaque moyen d'interface avec l'extérieur 3a à 3d est également relié à une ou plusieurs poignées de la portière associée audit moyen d'interface afin de détecter toute manoeuvre de l'utilisateur sur une poignée. Chaque moyen de communication externe 3a à 3d est connecté directement à l'unité centrale de contrôle 1.
■ une pluralité de moyens de communication interne 10a, 10b et 10c destinés à communiquer avec le moyen d'authentification 12 de l'utilisateur lorsque que ce dernier est à l'intérieur du véhicule. Chaque moyen de communication interne 10a, 10b et 10c est relié à l'unité centrale de contrôle 1.

Un procédé d'authentification d'un utilisateur selon l'état de la technique, utilisant un système de gestion électronique tel que précédemment décrit, est le suivant:
■ l'utilisateur du véhicule s'approche du véhicule avec un moyen d'authentification 12 qu'il porte sur lui (par exemple dans sa poche ou à la main).
■ En s'approchant du véhicule les moyens d'interface avec l'extérieur 3a à 3d détectent la présence du moyen d'authentification 12 de l'utilisateur. Alternativement ou en combinaison, les moyens d'interface détectent la manoeuvre de l'utilisateur sur une des poignées du véhicule.
■ Une fois une telle détection effectuée, l'information est envoyée à l'unité centrale de contrôle 1. En réponse, cette dernière envoie aux moyens d'interface une commande d'interrogation du moyen d'authentification 12. Cette interrogation de la part des moyens d'interface avec l'extérieur correspond à une trame envoyée au moyen d'authentification 12, généralement en basse fréquence par une antenne, demandant au moyen d'authentification 12 de s'identifier.
■ Le moyen d'authentification 12 en réponse à cette interrogation de la part des moyens d'interface envoie une réponse à destination de l'unité centrale de contrôle, généralement en haute fréquence afin de s'identifier. Une procédure d'identification peut alors avoir lieu entre le moyen d'authentification 12 et l'unité centrale de contrôle 1.
■ Une fois le moyen d'authentification 12 identifié, l'unité centrale de contrôle 1 envoie à une ou plusieurs unités de contrôle de portière 2a à 2d la commande de déverrouillage des portières associées.
■ Une fois l'utilisateur U à l'intérieur de l'habitacle H du véhicule V, l'unité centrale de contrôle 1 peut communiquer avec le moyen d'authentification 12 via des moyens de communication interne 10a, 10b et 10c. Une telle communication permet d'authentifier le moyen d'authentification 12 et/ou de localiser si nécessaire le moyen d'authentification 12 au sein du véhicule. Une telle authentification et/ou localisation permet par exemple à l'utilisateur de démarrer le véhicule par simple pression sur un bouton 9 de démarrage (relié à l'unité centrale de contrôle 1) sans nécessiter une clef de démarrage. En réponse à la pression de ce bouton 9 de démarrage, l'unité centrale de contrôle 1 envoie les commandes nécessaires au moteur et au démarreur pour le démarrage du véhicule V.

Si ce système de gestion électronique pour véhicule permet une identification/authentification sécurisée de l'utilisateur sans nécessiter de clef, des critiques ont été émises en ce que ce système de gestion nécessite que l'unité centrale de contrôle ait un grand nombre de connectiques pour connecter l'ensemble des moyens d'interface avec l'extérieur et des moyens de communication interne du véhicule. Or, un tel nombre de connectiques n'est pas toujours disponible pour une unité de contrôle donnée. En effet, une unité de contrôle donnée comprend un nombre fini de connectiques et si le besoin en connectique dépasse ce nombre, il faut alors changer pour une unité de contrôle ayant un plus grand nombre de connectique, ce qui représente un surcoût. De plus, les éléments filaires de connexion entre les moyens d'interface avec l'extérieur et les moyens de communication interne du véhicule et l'unité centrale de contrôle représentent un poids conséquent pour le véhicule.

Ainsi, un but de la présente invention est de fournir un système de gestion électronique qui permette de résoudre les inconvénients mentionnés.

Plus précisément, un but de la présente invention est de fournir un système de gestion électronique qui ne nécessite pas un nombre important de connectiques entre l'unité centrale de contrôle et les moyens de communication interne et externe.

Encore un autre but de la présente invention est de fournir un système de gestion électronique qui permet un temps de réponse (entre le moment de détection de l'intervention de l'utilisateur et le déverrouillage des portières) qui soit compatible avec les exigences de l'utilisateur.

A cet effet, l'invention concerne un système de gestion électronique d'un véhicule comprenant une pluralité de portières, tel que défini en revendication 1 annexée.

Avantageusement mais facultativement, l'invention comprend au moins l'une des caractéristiques suivantes :
■ le au moins un réseau de communication destiné à la communication entre la pluralité d'unités de contrôle de portière et l'unité centrale de contrôle comprend au moins un réseau de multiplexage distinct du réseau principal du véhicule,
■ le au moins un réseau de communication destiné à la communication entre la pluralité d'unités de contrôle de portière et l'unité centrale de contrôle comprend au moins un réseau multiplexé,
■ les moyens d'interface avec l'extérieur destinés à la détection une intervention extérieure d'un utilisateur du véhicule par un moyen d'interface avec l'extérieur comprennent des moyens de détection d'une manoeuvre de l'utilisateur sur une poignée de la portière associée audit moyen d'interface avec l'extérieur,
■ les moyens d'interface avec l'extérieur destinés à la détection d'une intervention extérieure d'un utilisateur du véhicule par un moyen d'interface avec l'extérieur comprennent des moyens de détection du moyen d'authentification de l'utilisateur à proximité dudit moyen d'interface avec l'extérieur,
■ le système comprend des moyens de communication interne connectés à l'unité centrale de contrôle via un réseau de communication,
■ le moyen d'interface avec l'extérieur de la porte du coffre du véhicule est connecté au réseau de communication reliant les moyens de communication interne à l'unité centrale de contrôle,
■ les moyens de communication interne comprennent au moins l'une des antennes suivantes:
   o une antenne située dans une partie avant de l'habitacle,
   o une antenne située dans une partie médiane de l'habitacle,
   o une antenne située dans une partie arrière de l'habitacle,
■ au moins une des antennes est connectée au réseau principal du véhicule,
■ le réseau de communication reliant les moyens de communication interne à l'unité centrale de contrôle comprend un réseau de multiplexage,
■ le système comprend un moyen de communication de proximité adapté pour communiquer avec le moyen d'authentification d'un utilisateur du véhicule lorsque ce dernier est situé à proximité du moyen de communication par proximité,
■ le moyen de communication de proximité est agencé à proximité d'un des moyens de communication interne,
■ le ou les réseau(x) de communication est(sont) un(des) réseau(x) de multiplexage de type CAN ou LIN.

L'invention concerne également un véhicule comprenant un système de gestion électronique pour véhicule selon l'une des revendications précédentes.

L'invention concerne également un procédé d'utilisation d'un système de gestion électronique pour véhicule selon l'invention, tel que défini en revendication annexée.

Avantageusement mais facultativement, le procédé comprend en outre l'étape suivante :
■ envoyer par unité de contrôle de portière à l'unité centrale de contrôle une information relative à la détection d'une intervention extérieure d'un utilisateur du véhicule.

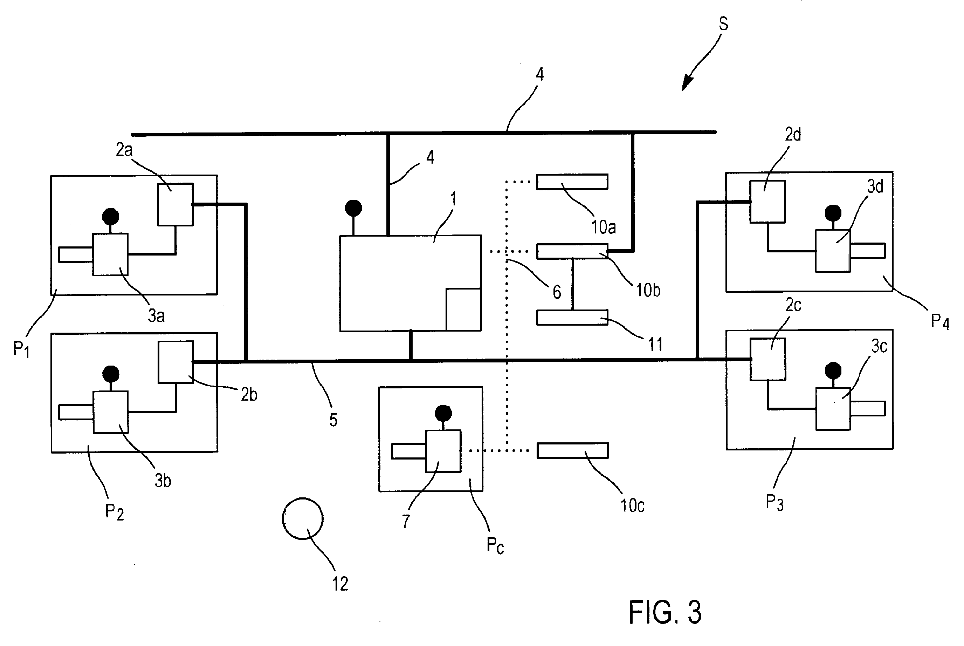

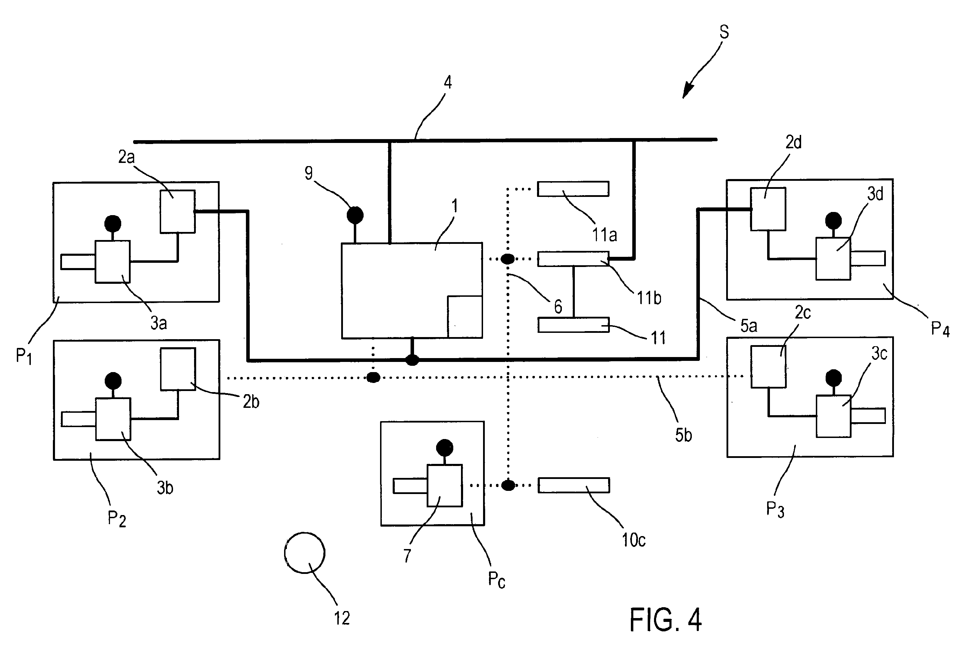

D'autres caractéristiques, buts et avantages de la présente invention apparaîtront à la lecture de la description détaillée qui va suivre d'un exemple non limitatif de mise en oeuvre, donné au regard des figures annexées sur lesquelles :
■ la figure 1 est une représentation schématique d'un système de gestion électronique pour véhicule selon l'état de la technique,
■ la figure 2 est une représentation schématique d'un véhicule avec les moyens de communication interne et externe,
■ la figure 3 est une représentation schématique d'un système de gestion électronique pour véhicule, selon un exemple utile à la compréhension de l'invention,
■ la figure 4 est une représentation schématique d'un système de gestion électronique pour véhicule selon une réalisation particulière de la présente invention,
■ la figure 5 est un graphe fonctionnel d'un procédé selon une réalisation possible de la présente invention.

En référence à la figure 3, le système de gestion électronique comprend :
- une unité centrale de contrôle 1 destinée à la gestion électronique centrale du véhicule V,
- une pluralité d'unités de contrôle de portière 2a, 2b, 2c, 2d, chacune étant notamment destinée au verrouillage/déverrouillage respectif de la portière P1, P2, P3 ou P4 à laquelle ladite unité de contrôle de portière est associée. Bien évidemment d'autres fonctions peuvent être remplies par ces unités de contrôle de portière comme la gestion des vitres. Ces unités de gestion sont par exemple mises en oeuvre à l'aide de microcontrôleur.
- une pluralité de moyens d'interface avec l'extérieur 3a, 3b, 3c et 3d, chacune associée à l'une des portières P1, P2, P3 et P4 du véhicule V et destinée :
   i. à détecter une intervention extérieure d'un utilisateur U du véhicule V, et
   ii. à communiquer avec un moyen d'authentification 12 de l'utilisateur du véhicule V.

La détection d'une intervention extérieure d'un utilisateur U du véhicule V est réalisée par exemple :
■ Par détection d'une manoeuvre de l'utilisateur sur une poignée d'une portière du véhicule. Afin de réaliser une telle fonction, il est par exemple prévu que la poignée soit munie d'un capteur qui envoie des informations audit moyen d'interface lors d'une manoeuvre sur la poignée. Par exemple, le capteur est agencé pour détecter une position en butée de la poignée lors de sa manoeuvre par un utilisateur. Plus préférentiellement, on peut munir la poignée de capteurs à champ proche : il mesure la variation de capacité autour de la poignée. Ainsi, lorsqu'on approche la main de moins de 2 cm de la poignée de porte, le capteur à champ proche détecte une variation de capacité. Ainsi, on initie une séquence d'identification avant que l'utilisateur n'ait physiquement touché la poignée.
■ Par détection d'un moyen d'authentification 12 d'un utilisateur à proximité du véhicule. Pour réaliser cette fonction, le moyen d'interface est par exemple muni d'une antenne apte à détecter la présence à proximité d'un moyen d'interface. Pour détecter la présence d'un moyen d'authentification, il est par exemple prévu que le moyen d'interface envoie à intervalles réguliers des trames d'intégration du moyen d'authentification préférentiellement en basse fréquence et d'une puissance telle que les trames ne sont plus perceptibles au-delà d'une distance donnée. A la réception d'une de ces trames, le moyen d'authentification 12 est conçu pour répondre, préférentiellement en basse fréquence, au moyen d'interface d'une manière prédéterminée permettant de ne pas confondre la réponse d'un moyen d'authentification avec tout autre onde que capturerait ladite antenne du moyen d'interface.

Afin de communiquer avec un moyen d'authentification 12 de l'utilisateur du véhicule V, le moyen d'interface est avantageusement conçu sous la forme d'un moyen de communication sans fil, permettant de communiquer par radio fréquence avec le moyen d'authentification 12 de l'utilisateur. Un tel moyen d'authentification 12 est généralement sous la forme d'un boitier destiné à communiquer sans fil avec le véhicule et plus particulièrement avec l'unité centrale de contrôle dans le but de s'identifier auprès de cette dernière comme décrit par la suite. Chaque moyen d'interface avec l'extérieur 3a à 3d est relié à une ou plusieurs poignées de la portière associée audit moyen d'interface afin de détecter toute manoeuvre de l'utilisateur sur une poignée. Chaque moyen de communication externe 3a à 3d est connecté directement à l'unité centrale de contrôle 1.

Selon une caractéristique essentielle de la présente invention, chaque moyen d'interface avec l'extérieur 3a, 3b, 3c et 3d est directement commandé par l'unité de contrôle de portière 2a, 2b, 2c et 2d de la portière dont le moyen de communication est associé.

Pour mettre en oeuvre une telle caractéristique, il est prévu par exemple de doter les moyens d'interface avec des connectiques permettant d'envoyer aux moyen d'interface des ordres de commande, soit par fil (comme représenté à la figure 3), soit sans fil (par radiofréquence par exemple).

Ainsi, les moyen d'interface 3a, 3b, 3c et 3d ne sont plus en communication directe avec l'unité centrale de contrôle 1 permettant de décentraliser une partie des fonctionnalités de l'unité centrale de contrôle 1 vers les portières. Cette décentralisation fonctionnelle permet d'une part de réduire les connectiques nécessaires au niveau de l'unité centrale de contrôle 1 par rapport aux systèmes de l'état de la technique et permet également de conserver des temps de réponse entre la détection d'une intervention extérieure d'un utilisateur U du véhicule V et le déverrouillage des portières compatibles avec les exigences de l'utilisateur U (c'est-à-dire généralement inférieur à 200ms).

Le système comprend en outre un réseau de communication 5 destiné à la communication entre la pluralité d'unités de contrôle de portière 2a, 2b, 2c, 2d et l'unité centrale de contrôle 1. Le réseau de communication 5 est préférentiellement un réseau de communication distinct du réseau principal 4 du véhicule V, qui est généralement un bus CAN. Plus préférentiellement encore, le réseau de communication 5 est un réseau multiplexé par exemple de type CAN basse vitesse tolérant aux défaillances (« fault tolerant » en termes anglo-saxons).

Ainsi, l'utilisation d'un réseau de multiplexage dédié à la gestion de l'identification d'un utilisateur du véhicule, autre que le réseau principal du véhicule permet d'avoir des temps de réponse compatibles avec les exigences de l'utilisateur, c'est-à-dire généralement des temps de réponse inférieur à 200ms.

Le système de gestion électronique comprend en outre des moyens de communication interne 10a, lOb et 10c, connectés à l'unité centrale de contrôle 1 via un réseau de communication 6.

Préférentiellement le moyen d'interface avec l'extérieur 7 de la porte Pc du coffre du véhicule V est connecté au réseau de communication 6 reliant les moyens de communication interne 10a, 10b, 10c à l'unité centrale de contrôle 1. Le moyen d'interface avec l'extérieur 7 de la porte Pc du coffre est similaire aux moyens d'interface 3a, 3b, 3c, 3d. Alternativement, la porte Pc du coffre du véhicule est gérée comme l'une des portières P1 à P4.

Le système comprend un moyen de communication de proximité 11, apte à communiquer avec le moyen d'authentification 12 à proximité de ce dernier (par exemple en utilisant la technologie de champs proche NFC - « Near Field Communication » en termes anglo-saxons).

Par exemple, si le moyen d'authentification 12 a la forme générale d'une carte, cette dernière peut être insérée dans le moyen de communication de proximité 11 ayant la forme générale d'un lecteur de carte.

Cette proximité entre le moyen de communication de proximité 11 et le moyen d'authentification 12 permet de garantir la communication entre les deux même si le signal de communication du moyen d'authentification 12 est faible (en cas d'avarie d'alimentation de la pile électrique - ou tout autre élément d'alimentation - du moyen d'authentification 12 par exemple). Alternativement, le moyen d'authentification 12 comprend une interface de communication physique qui, une fois le moyen d'authentification 12 à proximité du moyen de communication de proximité 11, rentre en contact avec une interface de communication physique du moyen de communication de proximité 11 afin de garantir la communication entre les deux et sert donc de moyen de communication de secours avec le moyen d'authentification 12.

Selon une réalisation particulière de la présente invention, le moyen de communication de proximité 11 est utilisé habituellement par l'utilisateur. Par exemple, une fois rentré dans l'habitacle du véhicule, l'utilisateur est invité à mettre son moyen d'authentification 12 au plus près du moyen de communication de proximité 11. Or selon cette réalisation particulière de l'invention, le moyen de communication de proximité 11 est situé à proximité d'une antenne de communication interne 10a, 10b ou 10c. Ainsi, lorsque le moyen de communication de proximité 11 est défaillant, le moyen d'authentification 12 de l'utilisateur peut toujours communiquer avec l'antenne à proximité du moyen de communication de proximité 11 afin de garantir la communication entre l'unité centrale de contrôle et le moyen d'authentification 12.

Les moyens de communication interne comprennent au moins l'une des antennes suivantes:
■ une antenne 10a située dans une partie avant de l'habitacle H du véhicule V,
■ une antenne 10b située dans une partie médiane de l'habitacle H du véhicule V,
■ une antenne 10c située dans une partie arrière de l'habitacle H du véhicule V.

Une telle distribution permet par exemple de localiser le moyen d'authentification 12 dans le véhicule en analysant la puissance des signaux reçus par l'unité centrale de contrôle 1 du moyen d'authentification 12.

Préférentiellement, au moins une des antennes, par exemple l'antenne 10b située dans une partie médiane de l'habitacle H, est connectée au bus principal du véhicule. Ainsi dans le cas où le réseau de communication 6 ne fonctionne plus, une continuité de service est assurée en passant par le bus principal du véhicule.

Le réseau de communication 6 reliant les antennes 10a, 10b et 10c à l'unité centrale de contrôle 1 est préférentiellement un réseau de multiplexage et plus préférentiellement, un réseau de multiplexage de type LIN. Alternativement, ce réseau peut être de tout type connu de l'état de la technique comme un réseau CAN.

En référence à la figure 4, le réseau de communication 5 destiné à la communication entre la pluralité d'unités de contrôle de portière 2a, 2b, 2c, 2d et l'unité centrale de contrôle 1 comprend un premier réseau de communication 5a dédié aux portières avants et un deuxième réseau de communication 5b dédié aux portières arrières. Ces deux réseaux de communication sont tous deux connectés à l'unité centrale de gestion du véhicule 1. Un tel agencement permet de sécuriser la communication au niveau du déverrouillage des portières en situation d'accident entrainant la mise hors service du premier réseau 5a ou du deuxième réseau 5b. Dans une telle situation, il est donc toujours possible à l'unité centrale de gestion du véhicule 1 de communiquer avec une partie des portières pour réaliser le déverrouillage.

En référence à la figure 5, un procédé d'authentification d'un utilisateur selon une réalisation possible de présente invention, utilisant un système de gestion électronique tel que précédemment décrit, est le suivant:
■ étape 50 : l'utilisateur du véhicule s'approche du véhicule avec un moyen d'authentification 12 qu'il porte sur lui (par exemple dans sa poche),
■ étape 51 : les moyens d'interface avec l'extérieur 3a à 3d détectent une intervention extérieure d'un utilisateur U du véhicule V. A cet égard, en s'approchant du véhicule, les moyens d'interface avec l'extérieur 3a à 3d détectent la présence du moyen d'authentification 12 de l'utilisateur. Alternativement ou en combinaison, les moyens d'interface détectent la manoeuvre de l'utilisateur sur une des poignées du véhicule.
■ étape 52 : Une fois une telle détection effectuée, l'information est envoyée par le moyen d'interface avec l'extérieur 3a à 3d qui a fait cette détection, à l'unité de contrôle de portière 2a à 2d de la portière dont ledit moyen d'interface est associé.
■ étape 53 : En réponse à une telle information, ladite unité de contrôle de portière envoie audit moyen d'interface une commande d'interrogation du moyen d'authentification 12. Cette interrogation de la part des moyens d'interface avec l'extérieur correspond à une trame envoyée au moyen d'authentification 12, généralement en basse fréquence par une antenne des moyens d'interface, demandant au moyen d'authentification 12 de s'identifier.
■ étape 54 : Préférentiellement mais facultativement, ladite unité de contrôle de portière envoie également une information à l'unité centrale de contrôle 1 afin d'informer cette dernière qu'une identification doit être effectuée entre elle et le moyen d'authentification 12.
■ étape 55 : Le moyen d'authentification 12 en réponse à cette interrogation de la part des moyens d'interface envoie une réponse à destination de l'unité centrale de contrôle, généralement en haute fréquence afin de s'identifier.
■ Etape 56 : Une procédure d'identification peut alors avoir lieu entre le moyen d'authentification 12 et l'unité centrale de contrôle 1.
■ étape 57 : Une fois le moyen d'authentification 12 identifié, l'unité centrale de contrôle 1 envoie à une ou plusieurs unités de contrôle de portière 2a à 2d la commande de déverrouillage des portières associées.
■ étape 58 : Une fois l'utilisateur U à l'intérieur de l'habitacle H du véhicule V, l'unité centrale de contrôle 1 peut communiquer avec le moyen d'authentification 12 via des moyens de communication interne 10a, 10b et 10c. Une telle communication permet d'authentifier le moyen d'authentification 12 et/ou de localiser si nécessaire le moyen d'authentification 12 au sein du véhicule. Une telle authentification et/ou localisation permet par exemple à l'utilisateur de démarrer le véhicule par simple pression sur un bouton 9 de démarrage relié à l'unité centrale de contrôle 1 qui envoie en réponse les commandes nécessaires au moteur et au démarreur pour le démarrage du véhicule V.

## Revendications

1. Système de gestion électronique (S) d'un véhicule (V) comprenant une pluralité de portières (P1, P2, P3, P4), le système comprenant :
- une unité centrale de contrôle (1) destinée à la gestion électronique centrale du véhicule (V),
- une pluralité d'unités de contrôle de portière (2a, 2b, 2c, 2d), chacune étant destinée au verrouillage/déverrouillage respectif de la portière (P1, P2, P3, P4) à laquelle ladite unité de contrôle de portière est associée,
- une pluralité de moyens d'interface avec l'extérieur (3a, 3b, 3c, 3d), chacun associé à une des portières (P1, P2, P3, P4) et destiné :
i. à détecter une intervention extérieure d'un utilisateur (U) du véhicule (V), et
ii. à communiquer avec un moyen d'authentification (12) de l'utilisateur (U) du véhicule (V),
- au moins un réseau de communication (5, 5a, 5b) destiné à la communication entre la pluralité d'unités de contrôle de portière (2a, 2b, 2c, 2d) et l'unité centrale de contrôle (1),
le système étant **caractérisé en ce que** chaque moyen d'interface avec l'extérieur (3a, 3b, 3c, 3d) est commandé directement par l'unité de contrôle de portière (2a, 2b, 2c, 2d) de la portière dont le moyen d'interface est associé, et **en ce que** le au moins un réseau de communication (5, 5a, 5b) destiné à la communication entre la pluralité d'unités de contrôle de portière (2a, 2b, 2c, 2d) et l'unité centrale de contrôle (1) comprend un réseau de communication (5a) dédié aux portières avants et un réseau de communication (5b) dédié aux portières arrières.

2. Système de gestion électronique pour véhicule selon la revendication 1, **caractérisé en ce que** le au moins un réseau de communication (5, 5a, 5b) destiné à la communication entre la pluralité d'unités de contrôle de portière (2a, 2b, 2c, 2d) et l'unité centrale de contrôle (1) comprend au moins un réseau de multiplexage distinct du réseau principal (4) du véhicule (V).

3. Système de gestion électronique pour véhicule selon la revendication 1 ou 2, **caractérisé en ce que** le au moins un réseau de communication (5, 5a, 5b) destiné à la communication entre la pluralité d'unités de contrôle de portière (2a, 2b, 2c, 2d) et l'unité centrale de contrôle (1) comprend au moins un réseau multiplexé.

4. Système de gestion électronique pour véhicule selon l'une des revendications 1 à 3, **caractérisé en ce que** les moyens d'interface avec l'extérieur destinés à la détection une intervention extérieure d'un utilisateur (U) du véhicule (V) par un moyen d'interface avec l'extérieur (3a, 3b, 3c, 3d) comprennent des moyens de détection d'une manoeuvre de l'utilisateur (U) sur une poignée de la portière (P1, P2, P3, P4) associée audit moyen d'interface avec l'extérieur.

5. Système de gestion électronique pour véhicule selon l'une des revendications 1 à 4, **caractérisé en ce que** les moyens d'interface avec l'extérieur destinés à la détection d'une intervention extérieure d'un utilisateur (U) du véhicule (V) par un moyen d'interface avec l'extérieur (3a, 3b, 3c, 3d) comprennent des moyens de détection du moyen d'authentification (12) de l'utilisateur (U) à proximité dudit moyen d'interface avec l'extérieur.

6. Système de gestion électronique pour véhicule selon l'une des revendications 1 à 5, **caractérisé en ce qu'**il comprend des moyens de communication interne (10a, 10b, 10c) connectés à l'unité centrale de contrôle (1) via un réseau de communication (6).

7. Système de gestion électronique pour véhicule selon la revendication 6, **caractérisé en ce que** le moyen d'interface avec l'extérieur (7) de la porte du coffre (Pc) du véhicule (V) est connecté au réseau de communication (6) reliant les moyens de communication interne (10a, 10b, 10c) à l'unité centrale de contrôle (1).

8. Système de gestion électronique pour véhicule selon l'une des revendications 6 ou 7, **caractérisé en ce que** les moyens de communication interne (10a, 10b, 10c) comprennent au moins l'une des antennes suivantes:
■ une antenne située dans une partie avant de l'habitacle (10a),
■ une antenne située dans une partie médiane de l'habitacle (10b),
■ une antenne située dans une partie arrière de l'habitacle (10c).

9. système de gestion électronique pour véhicule selon la revendication 8, **caractérisé en ce qu'**au moins une des antennes (10b) est connectée au réseau principal (4) du véhicule.

10. système de gestion électronique pour véhicule selon l'une des revendications 6 à 9, **caractérisé en ce que** le réseau de communication (6) reliant les moyens de communication interne (10a, 10b, 10c) à l'unité centrale de contrôle (1) comprend un réseau de multiplexage.

11. Système de gestion électronique pour véhicule selon l'une des revendications 1 à 10, **caractérisé en ce que** le système comprend un moyen de communication de proximité (11) adapté pour communiquer avec le moyen d'authentification (12) d'un utilisateur du véhicule (V) lorsque ce dernier est situé à proximité du moyen de communication par proximité (11).

12. Système de gestion électronique pour véhicule selon la revendication 11 en combinaison avec une des revendications 6 à 10, **caractérisé en ce que** le moyen de communication de proximité (11) est agencé à proximité d'un des moyens de communication interne (10b).

13. Système de gestion électronique pour véhicule selon l'une des revendications 1 à 12, **caractérisé en ce que** le ou les réseau(x) de communication est(sont) un(des) réseau(x) de multiplexage de type CAN ou LIN.

14. Véhicule (V) comprenant un système (S) de gestion électronique pour véhicule selon l'une des revendications précédentes.

15. Procédé d'utilisation d'un système de gestion électronique pour véhicule selon l'une des revendications 1 à 13, **caractérisé en ce qu'**il comprend les étapes suivantes :
■ détecter (51) par un des moyens d'interface avec l'extérieur (3a, 3b, 3c, 3d) d'une intervention extérieure d'un utilisateur (U) du véhicule (V),
■ envoyer (52) une information relative à cette détection à l'unité de contrôle de portière (2a, 2b, 2c, 2d) de la portière dont ledit moyen d'interface est associé,
■ envoyer (53) par ladite unité de contrôle de portière audit moyen d'interface une commande d'interrogation du moyen d'authentification (12),
■ envoyer (55) par moyen d'authentification (12) une réponse à destination de l'unité centrale de contrôle (1),
■ identifier (56) le moyen d'authentification (12),
■ envoyer (57) par l'unité centrale de contrôle (1) une commande de déverrouillage d'une ou plusieurs portière(s),
la communication entre les unités de contrôle de portières (2a, 2b, 2c, 2d) et l'unité centrale de contrôle (1) étant opérée par un réseau de communication (5a) dédié aux portières avant et respectivement un réseau de communication (5b) dédié aux portières arrières.

16. Procédé d'utilisation selon la revendication précédente **caractérisé en ce qu'** il comprend en outre l'étape suivante :
■ envoyer (54) par unité de contrôle de portière à l'unité centrale de contrôle (1) une information relative à la détection d'une intervention extérieure d'un utilisateur (U) du véhicule (V).

## Patentansprüche

1. Elektronisches Fahrzeugsteuersystem (S) zur elektronischen Steuerung eines Fahrzeugs (V) mit mehreren Türen (P1,P2,P3,P4), wobei das System aufweist:
- eine zentrale Steuereinheit (1) zur zentralen elektronischen Steuerung des Fahrzeugs (V),
- mehrere Türsteuereinheiten (2a,2b,2c,2d), wobei jede Türsteuereinheit für die Verriegelung/Entriegelung der ihr zugeordneten Tür (P1,P2,P3,P4) vorgesehen ist,
- mehrere Einrichtungen (3a,3b,3c,3d) als Schnittstellen mit der äußeren Umgebung (Außenschnittstelleneinrichtungen), deren jede einer der Türen (P1,P2,P3,P4) zugeordnet ist und vorgesehen ist, um
i) einen von einem Benutzer (U) des Fahrzeugs (V) von außen vorgenommenen Eingriff zu detektieren und
ii) mit einem Authentifizierungsmittel (12) des Benutzers (U) des Fahrzeugs (V) zu kommunizieren,
- mindestens ein Kommunikationsnetz (5,5a,5b) zur Kommunikation zwischen den mehreren Türsteuereinheiten (2a,2b,2c,2d) und der zentralen Steuereinheit (1),
wobei das System **dadurch gekennzeichnet ist, dass** jede Außenschnittstelleneinrichtung (3a,3b,3c,3d) direkt von der Türsteuereinheit (2a,2b,2c,2d) der dieser Schnittstelleneinrichtung zugeordneten Tür gesteuert wird und dadurch, dass das mindestens eine Kommunikationsnetz (5,5a,5b), das für die Kommunikation zwischen den mehreren Türsteuereinheiten (2a,2b,2c,2d) und der zentralen Steuereinheit (1) vorgesehen ist, ein Kommunikationsnetz (5a) für die vorderen Türen und ein Kommunikationsnetz (5b) für die hinteren Türen aufweist.

2. Elektronisches Fahrzeugsteuersystem nach Anspruch 1, **dadurch gekennzeichnet, dass** das mindestens eine Kommunikationsnetz (5,5a,5b), das für die Kommunikation zwischen den mehreren Türsteuereinheiten (2a,2b,2c,2d) und der zentralen Steuereinheit (1) vorgesehen ist, mindestens ein Multiplexing-Netz aufweist, das separat von dem Hauptnetz (4) des Fahrzeugs (V) ist.

3. Elektronisches Fahrzeugsteuersystem nach Anspruch 1 oder 2, **dadurch gekennzeichnet, dass** das mindestens eine Kommunikationsnetz (5,5a,5b), das für die Kommunikation zwischen den mehreren Türsteuereinheiten (2a,2b,2c,2d) und der zentralen Steuereinheit (1) vorgesehen ist, mindestens ein im Multiplex arbeitendes Netz aufweist.

4. Elektronisches Fahrzeugsteuersystem nach einem der Ansprüche 1 bis 3, **dadurch gekennzeichnet, dass** die Außenschnittstelleneinrichtungen, die vorgesehen sind, um einen von einem Benutzer (U) des Fahrzeugs (V) von außen vorgenommenen Eingriff durch eine Außenschnittstelleneinrichtung (3a,3b,3c,3d) zu detektieren, Einrichtungen zur Detektion einer von dem Benutzer (U) vorgenommenen Betätigung eines Türgriffs der dieser Außenschnittstelleneinrichtung zugeordneten Tür (P1,P2,P3,P4) aufweisen.

5. Elektronisches Fahrzeugsteuersystem nach einem der Ansprüche 1 bis 4, **dadurch gekennzeichnet, dass** die Außenschnittstelleneinrichtungen, die vorgesehen sind, um einen von einem Benutzer (U) des Fahrzeugs (V) von außen vorgenommenen Eingriff durch eine Außenschnittstelleneinrichtung (3a,3b,3c,3d) zu detektieren, Einrichtungen zur Detektion des Authentifizierungsmittels (12) des Benutzers (U), der sich in der Nähe dieser Außenschnittstelleneinrichtung befindet, aufweisen.

6. Elektronisches Fahrzeugsteuersystem nach einem der Ansprüche 1 bis 5, **dadurch gekennzeichnet, dass** es Innenkommunikationseinrichtungen (10a,10b,10c) aufweist, die über ein Kommunikationsnetz (6) mit der zentralen Steuereinheit (1) verbunden sind.

7. Elektronisches Fahrzeugsteuersystem nach Anspruch 6, **dadurch gekennzeichnet, dass** die Außenschnittstelleneinrichtung (7) der Kofferraumtür (Pc) des Fahrzeugs (V) an das Kommunikationsnetz (6) angeschlossen ist, das die Innenkommunikationseinrichtungen (10a,10b,10c) mit der zentralen Steuereinheit (1) verbindet.

8. Elektronisches Fahrzeugsteuersystem nach einem der Ansprüche 6 oder 7, **dadurch gekennzeichnet, dass** die Innenkommunikationseinrichtungen (10a,10b,10c) mindestens eine der folgenden Antennen aufweisen:
■ eine im vorderen Teil des Fahrgastraums angeordnete Antenne (10a)
■ eine im mittleren Teil des Fahrgastraums angeordnete Antenne (10b)
■ eine im hinteren Teil des Fahrgastraums angeordnete Antenne (10c).

9. Elektronisches Fahrzeugsteuersystem nach Anspruch 8, **dadurch gekennzeichnet, dass** mindestens eine der Antennen (10b) mit dem Hauptnetz (4) des Fahrzeugs verbunden ist.

10. Elektronisches Fahrzeugsteuersystem nach einem der Ansprüche 6 bis 9, **dadurch gekennzeichnet, dass** das Kommunikationsnetz (6), das die Innenkommunikationseinrichtungen (10a,10b,10c) mit der zentralen Steuereinheit (1) verbindet, ein Multiplexing-Netz aufweist.

11. Elektronisches Fahrzeugsteuersystem nach einem der Ansprüche 1 bis 10, **dadurch gekennzeichnet, dass** das System eine Nahkommunikationseinrichtung (1) aufweist, die in der Lage ist, mit dem Authentifizierungsmittel (12) eines Benutzers des Fahrzeugs (V) zu kommunizieren, wenn dieser sich in der Nähe der Nahkommunikationseinrichtung (11) befindet.

12. Elektronisches Fahrzeugsteuersystem nach Anspruch 11 in Kombination mit einem der Ansprüche 6 bis 10, **dadurch gekennzeichnet, dass** die Nahkommunikationseinrichtung (11) in der Nähe einer der Innenkommunikationseinrichtungen (10b) angeordnet ist.

13. Elektronisches Fahrzeugsteuersystem nach einem der Ansprüche 1 bis 12, **dadurch gekennzeichnet, dass** das oder die Kommunikationsnetze ein Multiplexing-Netz oder Multiplexing-Netze vom Typ CAN oder LIN ist/sind.

14. Fahrzeug (V), das ein elektronisches Fahrzeugsteuersystem (S) nach einem der vorstehenden Ansprüche aufweist.

15. Verfahren zur Verwendung eines elektronischen Fahrzeugsteuersystems nach einem der Ansprüche 1 bis 13, **dadurch gekennzeichnet, dass** es die folgenden Schritte aufweist:
■ einen Detektionsschritt (51), in welchem ein von einem Benutzer (U) des Fahrzeugs (V) von außen vorgenommener Eingriff von einer der Außenschnittstelleneinrichtungen (3a,3b,3c,3d) detektiert wird,
■ einen Sendeschritt (52), in welchem eine Information betreffend diese Detektion zu einer Türsteuereinheit (2a,2b,2c,2d) der dieser Schnittstelleneinrichtung zugeordneten Tür gesendet wird,
■ einen Sendeschritt (53), in welchem ein Abfragebefehl zur Abfrage des Authentifizierungsmittels (12) von dieser Türsteuereinheit zu dieser Schnittstelleneinrichtung gesendet wird,
■ einen Sendeschritt (55), in welchem eine Antwort von dem Authentifizierungsmittel zur zentralen Steuereinheit (1) gesendet wird,
■ einen Identifizierungsschritt (56), in welchem das Authentifizierungsmittel (12) identifiziert wird,
■ einen Sendeschritt (57), in welchem ein Befehl zur Entriegelung einer oder mehrerer Türen von der zentralen Steuereinheit (1) gesendet wird,
wobei die Kommunikation zwischen den Türsteuereinheiten (2a,2b,2c,2d) und der zentralen Steuereinheit (1) von einem Kommunikationsnetz (5a), das für die vorderen Türen bestimmt ist, bzw. einem Kommunikationsnetz (5b), das für die hinteren Türen bestimmt ist, durchgeführt wird.

16. Verfahren nach dem vorstehenden Anspruch, **dadurch gekennzeichnet, dass** es außerdem den folgenden
■ Sendeschritt (54) aufweist, in welchem eine Information betreffend die Detektion eines von einem Benutzer (U) des Fahrzeugs (V) von außen vorgenommenen Eingriffs von der Türsteuereinheit zur zentralen Steuereinheit (1) gesendet wird.

## Claims

1. An electronic management system (S) for managing a vehicle (V) comprising a plurality of doors (P1, P2, P3, P4), the system comprising:
- a central control unit (1) for the central electronic management of the vehicle (V),
- a plurality of door control units (2a, 2b, 2c, 2d) each being intended for the respective locking/unlocking of the door (P1, P2, P3, P4) with which said door control unit is associated;
- a plurality of interface means with the outside (3a, 3b, 3c, 3d) each associated with one of the doors (P1, P2, P3, P4) and intended:
i) to detect external action by a user (U) of the vehicle (V); and
ii) to communicate with authentication means (12) of the user (U) of the vehicle (V),
- at least one communication network (5, 5a, 5b) for communication between the plurality of door control units (2a, 2b, 2c, 2d) and the central control unit (1),
the system being **characterized in that** each interface means with the outside (3a, 3b, 3c, 3d) is controlled directly by the door control unit (2a, 2b, 2c, 2d) of the door with which the interface means is associated; and **in that** the at least one communication network (5, 5a, 5b) intended for communication between the plurality of door control units (2a, 2b, 2c, 2d) and the central control unit (1) comprises a communication network (5a) dedicated to the front doors and a communication network (5b) dedicated to the rear doors.

2. The electronic management system for vehicle according to claim 1, **characterized in that** the at least one communication network (5, 5a, 5b) intended for communication between the plurality of door control units (2a, 2b, 2c, 2d) and the central control unit (1) comprises at least one multiplexing network separate from the main network (4) of the vehicle (V).

3. The electronic management system for vehicle according to claim 1 or 2, **characterized in that** the at least one communication network (5, 5a, 5b) intended for communication between the plurality of door control units (2a, 2b, 2c, 2d) and the central control unit (1) comprises at least one multiplexed network.

4. The electronic management system for vehicle according to one of claims 1 to 3, **characterized in that** the interface means with the outside intended for detection of outside action by a user (U) of the vehicle (V) via interface means with the outside (3a, 3b, 3c, 3d) comprise means to detect the operating by the user (U) of a handle of the door (P1, P2, P3, P4) associated with said interface means with the outside.

5. The electronic management system for vehicle according to one of claims 1 to 4 **characterized in that** the interface means with the outside intended for detection of outside action by a user (U) of the vehicle (V) via interface means with the outside (3a, 3b, 3c, 3d) comprise means for detecting the authentication means (12) of the user (U) in the vicinity of said interface means with the outside.

6. The electronic management system for vehicle according to one of claims 1 to 5, **characterized in that** it comprises internal communication means (10a, 10b, 10c) connected to the central control unit (1) via a communication network (6).

7. The electronic management system for vehicle according to claim 6, **characterized in that** the interface means with the outside (7) of the boot door (Pc) of the vehicle (V) are connected to the communication network (6) linking the internal communication means (10a, 10b, 10c) with the central control unit (1).

8. The electronic management system for vehicle according to one of claims 6 or 7, **characterized in that** the internal communication means (10a, 10b, 10c) comprise at least one of the following antennas:
- an antenna located in a front part of the passenger compartment (10a);
- an antenna located in a median part of the passenger compartment (10b);
- an antenna located in a rear part of the passenger compartment (10c).

9. The electronic management system for vehicle according to claim 8, **characterized in that** at least one of the antennas (10b) is connected to the main network (4) of the vehicle.

10. The electronic management system for vehicle according to one of claims 6 to 9, **characterized in that** the communication network (6) linking the internal communication means (10a, 10b, 10c) with the central control unit (1) comprises a multiplexing network.

11. The electronic management system for vehicle according to one of claims 1 to 10, **characterized in that** the system comprises proximity communication means (11) adapted to communicate with the authentication means (12) of a user of the vehicle (V) when the latter is positioned in the vicinity of the proximity communication means (11).

12. The electronic management system for vehicle according to claim 11, in combination with one of claims 6 to 10, **characterized in that** the proximity communication means (11) are arranged in the vicinity of one of the internal communication means (10b).

13. The electronic management system for vehicle according to one of claims 1 to 12, **characterized in that** the communication network(s) is or are a multiplexing network of CAN or LIN type.

14. A vehicle (V) comprising an electronic management system (S) for vehicle according to one of the preceding claims.

15. A method for using an electronic management system for vehicle according to one of claims 1 to 13, **characterized in that** it comprises the following steps:
- detecting (51), via one of the interface means with the outside (3a, 3b, 3c, 3d), external action by a user (U) of the vehicle (V),
- sending (52) data on this detection to the door control unit (2a, 2b, 2c, 2d) of the door with which the said interface is associated,
- sending (53), via said door control unit to said interface means, an instruction to request authentication by the authentication means (12),
- sending (55), via the authentication means (12), an answer to the central control unit (1),
- identifying (56) the authentication means (12),
- sending (57), via the central control unit (1), an instruction to unlock one or more doors,
the communication between the door control units (2a, 2b, 2c, 2d) and the central control unit (1) being operated by a communication network (5a) dedicated to the front doors and respectively a communication unit (5b) dedicated to the rear doors.

16. The method of use according to the preceding claim, **characterized in that** it further comprises the following step:
- sending (54), via a door control unit to the central control unit (1), data relating to the detection of external action by a user (U) of the vehicle (V).
